# EUROPEAN PATENT APPLICATION

(11) **EP 4 221 108 A1**
(43) Date of publication of application: **02.08.2023**
(21) Application number: 21874449.8
(22) Date of filing: 28.09.2021
(51) Int. Cl.: H04L 27/00, H04B 7/0408, H04W 24/08, H04W 72/04

(54) **SIGNAL TRANSMISSION AND FREQUENCY OFFSET ESTIMATION METHODS, COMMUNICATION NETWORK SYSTEM, TERMINAL, ELECTRONIC DEVICE, AND COMPUTER-READABLE MEDIUM**

(30) Priority: 30.09.2020 CN 202011062777
(71) Applicant: ZTE Corporation, Shenzhen, Guangdong 518057 (CN)
(72) Inventor: LI, Shulin, Shenzhen, Guangdong 518057 (CN); WU, Jiwen, Shenzhen, Guangdong 518057 (CN)
(74) Representative: Canzler & Bergmeier Patentanwälte Partnerschaft mbB
(86) International application number: PCT/CN2021/121187
(87) International publication number: WO 2022/068789

(57) **Abstract**

The embodiments of the present disclosure relate to the technical field of communications, and provide a signal transmission method. The method can be applied to a communication network system and comprises: transmitting to a terminal a plurality of beams belonging to a cell, each beam among the plurality of beams belonging to a cell being configured with at least one synchronization signal and physical broadcast channel block (SSB), at least two beams among the plurality of beams belonging to a cell forming an overlapping beam group, any two beams in the overlapping beam group having different directions and overlapping, and all SSBs of any two beams being different; receiving performance measurement values of a plurality of SSBs of a plurality of beams in an overlapping beam group transmitted by the terminal, and determining, according to the performance measurement values, one SSB from among the plurality of SSBs; and sending a beam switching request to the terminal, the beam switching request comprising an identification of the SSB. Further provided in the embodiments of the present disclosure are a frequency offset estimation method, a communication network system, a terminal, an electronic device, and a computer-readable medium.

## Description

The present application claims the priority of Chinese Patent Application No. 202011062777.2, filed on September 30, 2020, the contents of which are incorporated herein in their entirety by reference.

### TECHNICAL FIELD

The present disclosure relates to the field of communication technology.

### BACKGROUND

During each communication process, a movement of a terminal causes a wavelength of a signal received by the terminal to change due to a relative motion of the terminal with respect to a base station, that is a Doppler Frequency Shift, referred to as a frequency offset for short, occurs between the base station and the terminal.

### SUMMARY

A first aspect of the present disclosure provides a signal transmission method, applied to a communication network system, including: transmitting a plurality of beams belonging to a same cell to a terminal, each beam of the plurality of beams belonging to the same cell being configured with at least one synchronization signal and physical broadcast channel block (SSB), and at least two beams of the plurality of beams belonging to the same cell forming an overlapping beam group, any two beams in the overlapping beam group being in different directions and overlapped, and all SSBs of any two beams being different; receiving performance measurement values of the SSBs of the beams in the overlapping beam group transmitted by the terminal, and determining one SSB from the SSBs according to the performance measurement values; and transmitting a beam switching request to the terminal, the beam switching request including an identification of the one SSB.

A second aspect of the present disclosure provides a frequency offset estimation method, applied to a terminal, including: receiving a plurality of beams, belonging to a same cell, in different directions, and receiving a SSB corresponding to each beam of the plurality of beams belonging to the same cell, each beam being configured with at least one SSB; measuring a performance of each SSB received to obtain a performance measurement value, and transmitting the performance measurement value to a communication network system; and receiving a beam switching request transmitted by the communication network system, the beam switching request including an identification of the SSB selected, and performing SSB switching according to the beam switching request.

A third aspect of the present disclosure provides a communication network system, including: a plurality of transmitting units configured to transmit a plurality of beams, belonging to a same cell, to a terminal, each beam of the plurality of beams belonging to the same cell being configured with at least one SSB, and at least two beams of the plurality of beams belonging to the same cell forming an overlapping beam group, any two beams in the overlapping beam group being in different directions and overlapped, and all SSBs of any two beams being different; a determining module configured to receive performance measurement values of the SSBs of the beams in the overlapping beam group transmitted by the terminal, and determine one SSB from the SSBs according to the performance measurement values; and a transmitting module configured to transmit a beam switching request to the terminal, the beam switching request including an identification of the one SSB.

A fourth aspect of the present disclosure provides a terminal, including: a receiving module configured to receive a plurality of beams belonging to a same cell and being in different directions, and receive a SSB corresponding to each beam of the plurality of beams belonging to the same cell, each beam being configured with at least one SSB; a measurement module configured to measure a performance of each SSB received to obtain a performance measurement value and transmit the performance measurement value to a communication network system; and a calculation module configured to receive a beam switching request transmitted by the communication network system, the beam switching request including an identification of the SSB selected, and perform SSB switching according to the beam switching request.

A fifth aspect of the present disclosure provides an electronic device, including: at least one processor; and a memory having at least one program stored thereon, the at least one program, executed by the at least one processor, causes the at least one processor to implement the signal transmission method provided by the first aspect of the present disclosure.

A sixth aspect of the present disclosure provides a computer-readable medium, storing a computer program thereon, the computer program, executed by a processor, causes the processor to implement the signal transmission method provided by the first aspect of the present disclosure.

A seventh aspect of the present disclosure provides an electronic device, including: at least one processor; and a memory having at least one program stored thereon, the at least one program, executed by the at least one processor, causes the at least one processor to implement the frequency offset estimation method provided by the second aspect of the present disclosure.

An eighth aspect of the present disclosure provides a computer-readable medium, storing a computer program thereon, the computer program, executed by a processor, causes the processor to implement the frequency offset estimation method provided by the second aspect of the present disclosure.

### DESCRIPTION OF DRAWINGS

Fig. 1 is a flowchart of a signal transmission method according to the present disclosure.
Fig. 2 is a flowchart of a signal transmission method according to the present disclosure.
Fig. 3 is a flowchart of a signal configuration method according to the present disclosure.
Fig. 4 is a flowchart of a frequency offset estimation method according to the present disclosure.
Fig. 5 is a flowchart of a frequency offset estimation method according to the present disclosure.
Fig. 6 is a schematic diagram of networking of a linear chain type according to the present disclosure.
Fig. 7 is a block diagram of a communication network system according to the present disclosure.
Fig. 8 is a block diagram of a terminal according to the present disclosure.
Fig. 9 is a block diagram of an electronic device according to the present disclosure.
Fig. 10 is a block diagram of a computer-readable medium according to the present disclosure.

### DETAILED DESCRIPTION

In order to make a person skilled in the art better understand the present disclosure, a signal transmission method, a frequency offset estimation method, a communication network system, a terminal, an electronic device, and a computer-readable medium provided by the present disclosure will be described in detail below with reference to the accompanying drawings.

Embodiments of present disclosure will be described in detail below with reference to the accompanying drawings, but may be embodied in different forms and should not be construed as limiting the scope of the present disclosure. These embodiments are provided so that the present disclosure will be thorough and complete, and will enable the person skilled in the art to fully understand the scope of the present disclosure.

The accompanying drawings of the embodiments of the present disclosure are used to provide a further understanding of the disclosed embodiments and constitute a part of the specification, together with the embodiments of the present disclosure to explain the present disclosure but not to limit the present disclosure. The above and other features and advantages will become more apparent to a person skilled in the art by describing in detail the exemplary embodiments with reference to the accompanying drawings.

The embodiments of the present disclosure may be described with reference to plan and/or cross-sectional views by way of idealized schematic illustrations of the present disclosure. Accordingly, the example illustrations may be modified in accordance with manufacturing techniques and/or tolerances.

Implementations of the embodiments and features in the implementations may be combined with each other without any conflict.

The terms used herein are merely used to describe specific embodiments, but are not intended to limit the present disclosure. As used herein, the term "and/or" includes any and all combinations of at least one associated listed item. As used herein, terms "a", "an" and "the" which indicate a singular form are intended to include a plural form, unless expressly stated in the context. It should be further understood that the term(s) "comprise/include" and/or "be made of" used herein indicate(s) the presence of the described features, integers, operations, operations, elements and/or components, but do/does not exclude the presence or addition one or more other features, integers, operations, operations, elements, components and/or combinations thereof.

Unless otherwise defined, all terms (including technical and scientific terms) used herein have the same meaning as commonly understood by a person skilled in the art. It will be further understood that terms, such as the terms defined in commonly used dictionary, should be interpreted as having meanings consistent with their meanings in the context of the related art and the present disclosure, and will not be interpreted as having idealized or over formal meanings unless specifically defined herein.

The embodiments of present disclosure are not limited to the implementations shown in the accompanying drawings, but include modifications of configurations formed based on manufacturing processes. Thus, the regions illustrated in the accompanying drawings have schematic properties, and the shapes of the regions shown in the drawings illustrate specific shapes of regions of elements, but are not intended to limit the present disclosure.

During each communication process, a frequency offset may be generated between a base station and a terminal. The terminal may perform frequency offset estimation and compensation by using a SSB and a tracking reference signal (TRS). If the compensation is wrong, the demodulation performance of the base station may be deteriorated sharply, which may seriously affect user experiences.

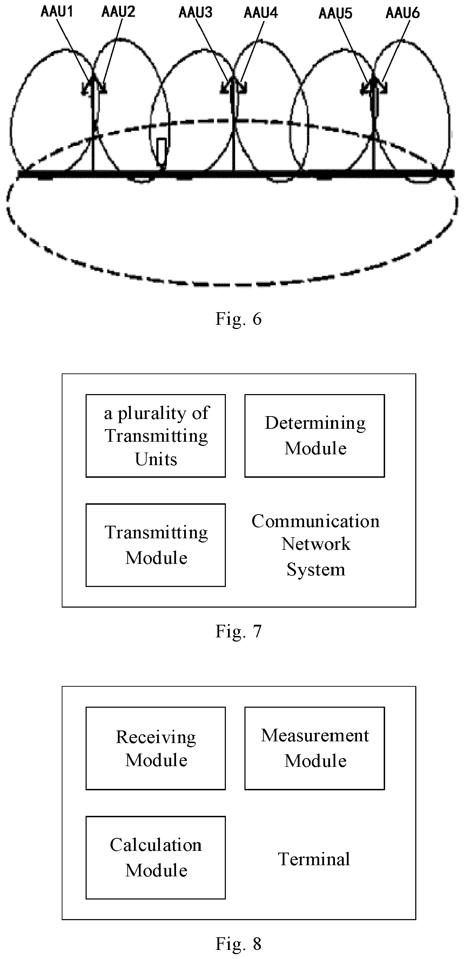

For example, referring to Fig. 6, in some scenarios, such as special scenarios of a railway (e.g., a high-speed rail), a highway, etc., networking of a linear chain type is adopted for deploying a base station, that is, for deploying the base station, poles (i.e., structures for installing transmitting units) are arranged along the railway or the highway, each pole is installed with at least two transmitting units that transmit beams in opposite directions along the railway or the highway, and the transmitting units may be active antenna units (AAUs). AAU1 and AAU2 in Fig. 6 are installed back to back on the same pole, and transmit beams in two different directions. There may be an overlap between coverage areas of different beams, i.e., there is a coverage overlapping area, the terminal located in the coverage overlapping area may receive a plurality of beams in different directions, for example, the terminal located in the coverage overlapping area may receive a pair of opposite beams (i.e., two beams transmitted in opposite directions by adjacent AAUs of adjacent poles), and in Fig. 6, the coverage areas of the beams of AAU2 and AAU3 are overlapped and the coverage areas of the beams of AAU4 and AAU5 are overlapped.

Moreover, in order to reduce the number of times that the terminal switches between cells, a cell-merged networking is adopted in a railway network, that is, multiple AAUs use a same cell identifier (Cell ID), referring to Fig. 6, beams (i.e., elliptical portions of AAU1 to AAU6) transmitted by multiple AAUs (i.e., AAU1 to AAU 6) with the same Cell ID are all configured with a same SSB, during the terminal (e.g., indicating by a block in the overlapping area between AAU2 and AAU3 in Fig. 6) moves from AAU2 to AAU3 quickly, the beam used by the terminal may be switched from the beam transmitted by AAU2 to the beam transmitted by AAU3, and the frequency offset of the terminal may jump from a negative frequency offset (the terminal is moving toward a direction opposite to the direction of the beam used by the terminal) to a positive frequency offset (the terminal is moving toward a direction the same as the direction of the beam used by the terminal). During the terminal is in the coverage overlapping area corresponding to AAU2 and AAU3, the terminal receives a mixture of beams transmitted by AAU2 and AAU3, and since all the beams transmitted by AAUs are configured with the same SSB, the terminal cannot determine the received SSB is from which AAU, that is, the terminal cannot determine whether a positive frequency offset or a negative frequency offset is generated, a frequency offset estimation result calculated is obviously inaccurate, and a subsequent processing (i.e., frequency offset compensation) according to the frequency offset estimation result is obviously inaccurate.

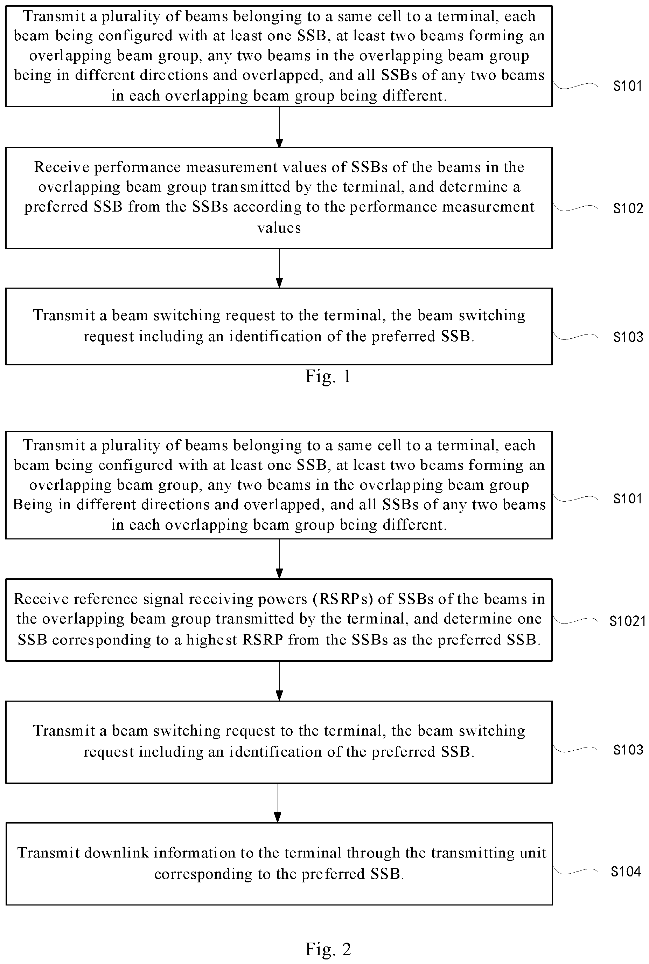

In a first aspect, referring to Fig. 1, the present disclosure provides a signal transmission method, applied to a communication network system, including following operations S101 to S103.

In operation S101, a plurality of beams belonging to a same cell are transmitted to a terminal, and each beam is configured with at least one SSB; at least two beams form an overlapping beam group, any two beams in the overlapping beam group are in different directions and overlapped, and all SSBs of any two beams in each overlapping beam group are different.

In the communication network system, for example, all transmitting units (e.g., AAUs) employing a same Cell ID (i.e., in a same Cell) transmit beams, and each beam is configured with at least one SSB. At least one overlapping beam group comprising multiple beams exists in the beams, any two beams in the overlapping beam group are in different directions and overlapped (that is, there is a coverage overlapping area), and all SSBs of any two beams are different.

As shown in Fig. 6, AAU2 and AAU3 transmit beams, in different directions, overlapped in a coverage overlapping area, and in a case where the SSB corresponding to AAU2 is different from the SSB corresponding to AAU3, the beam of AAU2 and the beam of AAU3 form an overlapping beam group.

In operation S102, performance measurement values of the SSBs of the beams in the overlapping beam group transmitted by the terminal are received, and one SSB is determined, as a preferred SSB, from the SSBs according to the performance measurement values.

In the communication network system, for example, a base station corresponding to the cell in which the overlapping beam group is located, receives the performance measurement values of the SSBs of the beams in the overlapping beam group transmitted by the terminal, and determines one SSB, as the preferred SSB, from the SSBs according to the received measurement values.

It should be noted that, after determining the preferred SSB, the communication network system further determines a configuration, of the TRS and the channel state information reference signal (CSI-RS), that satisfies a quasi-co-location (QCL) relationship with the preferred SSB.

In operation S103, a beam switching request is transmitted to the terminal, and the beam switching request includes an identification of the preferred SSB.

In the communication network system, for example, the base station corresponding to the cell in which the overlapping beam group is located, transmits the beam switching request including the identification of the preferred SSB to the terminal, and the beam switching request is used to request the terminal to perform beam switching, so as to switch to the beam corresponding to the preferred SSB.

According to the signal transmission method provided by the present disclosure, the beams, in different directions and overlapped, transmitted by the transmitting units are configured with different SSBs. The communication network system determines a preferred SSB according to received performance measurement values/results of the different SSBs and transmits the preferred SSB to the terminal, so that the terminal performs a frequency offset estimation according to the preferred SSB, that is, the terminal can determine the direction of beam corresponding to the preferred SSB, and further accurately determine whether the frequency offset of the terminal is a positive frequency offset or a negative frequency offset, thereby obtaining an accurate frequency offset estimation result.

The signal transmission method provided by the present disclosure is particularly applicable to scenarios such as a high-speed rail and a highway, in these scenarios, a moving speed of the terminal is relatively high, and generally, the directions of beams in the overlapping beam group deployed in these scenarios are completely opposite and parallel to the moving direction of the terminal, and thus the terminal in these scenarios usually has a relatively large frequency offset.

Certainly, the signal transmission method provided by the present disclosure is also applicable to other scenarios, for example, the directions of two beams in the overlapping beam group are not completely opposite, but are at other angles; or three or more beams may form the overlapping beam group; the moving direction of the terminal may also be not parallel to the direction of the beams, but with an angle therebetween.

Referring to Fig. 2, in an implementation, the operation S102 of receiving the performance measurement values of the SSBs of the beams in the overlapping beam group transmitted by the terminal, and determining a preferred SSB from the SSBs according to the performance measurement values may include following operation S 1021.

In operation S1021, reference signal receiving powers (RSRPs) of the SSBs of the beams in the overlapping beam group transmitted by the terminal are received, and the SSB, corresponding to the highest RSRP, in the SSBs is determined as the preferred SSB.

In the communication network system, for example, the base station corresponding to the cell in which the overlapping beam group is located, after receiving the performance measurement values of the SSBs of the beams in the overlapping beam group transmitted by the terminal, determines the SSB corresponding to the highest measurement value (i.e., the SSB with the best performance "considered" by the terminal) as the preferred SSB.

After determining the preferred SSB, the base station transmits the beam switching request to the terminal, and the terminal performs beam switching after receiving the beam switching request, and switches to the beam corresponding to the preferred SSB. That is to say, the terminal is to perform the frequency offset estimation according to the preferred SSB, and if the performance of the preferred SSB cannot meet an expectation of frequency offset estimation, an effect of frequency offset estimation is obviously not to be good. Furthermore, on a basis of meeting the expectation, the better the performance of the preferred SSB is, the more accurate the frequency offset estimation result obtained is.

Referring to Fig. 2, in an implementation, after transmitting the beam switching request to the terminal in operation S 103, the signal transmission method may further include following operation S104.

In operation S 104, downlink information is transmitted to the terminal through the transmitting unit corresponding to the preferred SSB.

In the communication network system, for example, after the base station transmitting the beam switching request to the terminal, the terminal may perform beam switching after receiving the beam switching request, that is, switches to the beam corresponding to the preferred SSB, that is, then the terminal can only receive data transmitted by the transmitting unit corresponding to the preferred SSB, and thus in order to save transmission resources and improve transmission efficiency, the base station transmits downlink information through the transmitting unit corresponding to the preferred SSB (if the transmitting units corresponding to other SSBs transmit downlink data, it may be possible that the terminal cannot receive the downlink data, which may affect transmission efficiency and waste transmission resources).

The downlink information here is all data to be transmitted to the terminal by the base station, and includes not only service data to be transmitted to the terminal by the base stations, but also other data with special purposes, such as a TRS for tracking a frequency offset and a CSI-RS for obtaining a downlink channel quality.

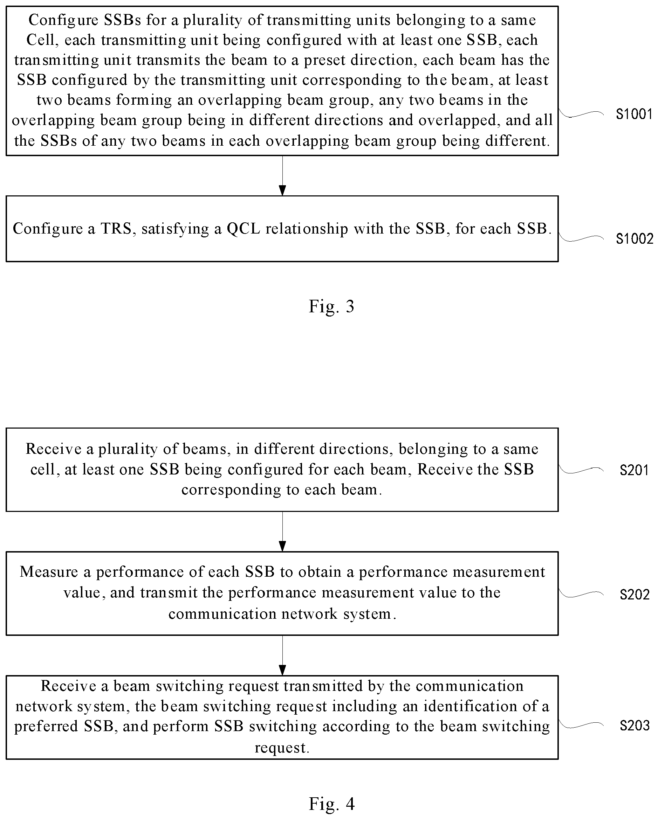

Referring to Fig. 3, in an implementation, before the operation S101 of transmitting the plurality of beams belonging to the same cell to the terminal, the signal transmission method may further include operation S 1001.

In operation S1001, SSBs are configured for the transmitting units belonging to the same cell; each transmitting unit is configured with at least one SSB, each transmitting unit transmits a beam to a preset direction, each beam has the SSB configured for the transmitting unit corresponding to the beam, at least two beams form an overlapping beam group, any two beams in the overlapping beam group are in different directions and overlapped, and all SSBs of any two beams in each overlapping beam group are different.

The communication network system configures SSBs for the transmitting units (e.g., AAUs in a same cell) using the same Cell ID (i.e., in the same cell), the AAUs in the same cell transmit beams to preset directions, different AAUs transmit beams to different directions (e.g., two AAUs on a same pole transmit beams to different directions respectively), and each AAU transmits the beam having the SSB configured for the AAU.

For the AAUs in the same cell, the beams transmitted by at least part of AAUs form an overlapping beam group, and any two beams in the overlapping beam group are in different directions and overlapped (i.e., there is a coverage overlapping area), during the communication network system configuring SSBs for the AAUs, all SSBs of any two beams in each of at least part of overlapping beam groups should be ensured to be different. In some implementations, the communication network system should ensure that all SSBs of any two beams in each of all overlapping beam groups are different during configuring SSBs for the AAUs.

Referring to Fig. 6, the beams transmitted by AAU2 and AAU3 form an overlapping beam group, and different SSBs should be configured for AAU2 and AAU3, for example, if only one SSB is configured for each AAU, SSB0 may be configured for AAU2, and SSB1 may be configured for AAU3; if two SSBs are configured for each AAU, then SSB0 and SSB1 may be configured for AAU2 , and SSB2 and SSB3 may be configured for AAU3; if four SSBs are configured for each AAU, then SSB0, SSB1, SSB2, and SSB3 may be configured for AAU2, and SSB4, SSBS, SSB6, and SSB7 may be configured for AAU3.

The beams transmitted by AAUs belonging to a same pole (e.g. AAU1 and AAU2) do not form the overlapping beam group, and thus, for saving resources, a same SSB may be configured for the AAUs belonging to the same pole, that is, if only one SSB is configured for each AAU, SSB0 may be configured for AAU1 and AAU2, and SSB1 may be configured for AAU3 and AAU 4; if two SSBs are configured for each AAU, then SSB0 and SSB1 may be configured for AAU1 and AAU2, SSB2 and SSB3 may be configured for AAU3 and AAU4; if four SSBs are configured for each AAU, then SSB0, SSB1, SSB2 and SSB3 may be configured for AAU1 and AAU2, and SSB4, SSBS, SSB6 and SSB7 may be configured for AAU3 and AAU 4.

Certainly, the signal configuration method provided by the present disclosure may also be used to configure SSBs manually, that is, manually configure SSBs for the AAUs belonging to the same cell, and all SSBs of any two beams in at least part of overlapped beams should also be ensured to be different.

By configuring different SSBs for the transmission units, transmitting beams in different directions and overlapped, the terminal can distinguish which transmitting unit the SSB comes from even if the terminal receives the beams in different directions transmitted by the transmitting units in the same cell, that is, the terminal can determine the direction of the beam corresponding to the preferred SSB, and further accurately determine whether the frequency offset of the terminal is a positive frequency offset or a negative frequency offset, thereby obtaining an accurate frequency offset estimation result.

Referring to Fig. 3, in an implementation, after the operation S1001 of configuring SSBs for the transmitting units belonging to the same cell, the signal transmitting method may further include operation S 1002.

In operation S1002, a TRS satisfying a QCL relationship with the SSB is configured for each SSB.

After the communication network system configures the SSBs for the transmitting units in the same cell, the communication network system configures a corresponding TRS for each SSB, where a QCL relationship is satisfied between the TRS and the SSB, that is, characteristics of a channel for transmitting the TRS can be inferred from characteristics of a channel for transmitting the SSB.

The terminal can continuously perform compensation and tracking of time offset and frequency offset in the process of receiving downlink data, according to the TRS, and thus the SSB is configured with the TRS satisfying the QCL relationship with the SSB, so that the terminal can conveniently obtain the TRS and perform compensation and tracking of time offset and frequency offset according to the TRS.

In a second aspect, referring to Fig. 4, the present disclosure provides a frequency offset estimation method, applied to a terminal, including operations S201 to S203.

In operation S201, a plurality of beams, in different directions, belonging to a same cell are received, at least one SSB is configured for each beam, and the SSB corresponding to each beam is received.

The terminal receives beams in different directions transmitted by the transmitting units (e.g., AAUs in a same cell) using a same Cell ID (i.e., in the same cell), each beam corresponds to at least one SSB, and the terminal receives all SSBs corresponding to each beam.

In operation S202, the performance of each SSB is measured to obtain a performance measurement value, and the performance measurement value is transmitted to the communication network system.

The terminal measures performances of all received SSBs and transmits all measurement values obtained by measuring to the communication network system.

In operation S203, a beam switching request transmitted by the communication network system is received, the beam switching request includes an identification of a preferred SSB, and a SSB switching is performed according to the beam switching request.

After the terminal transmitting the measurement values to the communication network system, the communication network system determines a preferred SSB from the SSBs according to the received measurement values, and transmits the beam switching request to the terminal to request the terminal to switch to the beam corresponding to the preferred SSB. After receiving the beam switching request transmitted by the communication network system, the terminal performs beam switching, to switch to the beam corresponding to the preferred SSB, and performs the frequency offset estimation according to the preferred SSB.

After the frequency offset estimation, the frequency offset estimation result is to be further processed, for example, the frequency offset estimation result is to be filtered to smooth out an impact of instability of signal on the frequency offset estimation result, and after completing the processing, the frequency offset compensation is performed according to the frequency offset estimation result.

For the terminal, the terminal can receive a plurality of beams in different directions of a same cell only during being in the coverage overlapping area, that is, the plurality of beams in different directions are in an overlapping beam group corresponding to the coverage overlapping area.

Certainly, if the terminal receives beams, in different directions, not in a same cell, or even the terminal receives multiple beams in a same direction, after receiving the SSBs corresponding to the beams, the terminal can also use the frequency offset estimation method provided by the present disclosure, that is, can measure the performances of the received SSBs (since the beams come from different cells with different Cell IDs, the SSBs are different), transmit measurement values by measuring to the communication network system, receive and switch to the preferred SSB determined by the communication network system, and perform the frequency offset estimation according to the preferred SSB.

According to the frequency offset estimation method provided by the present disclosure, the transmitting units transmitting the beams in different directions and overlapped are configured with different SSBs, after receiving the SSBs, the terminal measures performances of the SSBs and transmits measurement values obtained by measuring to the communication network system, so that the communication network system determines a preferred SSB according to the measurement values, and the terminal performs frequency offset estimation and beam switching according to the preferred SSB. Since the transmitting units transmitting the beams in different directions and overlapped are configured with different SSBs, the terminal can determine the transmission unit corresponding to the preferred SSB according to the preferred SSB, that is, the terminal can determine the direction of the beam corresponding to the preferred SSB, and further accurately determine whether the frequency offset of the terminal is a positive frequency offset or a negative frequency offset, and obtain an accurate frequency offset estimation result.

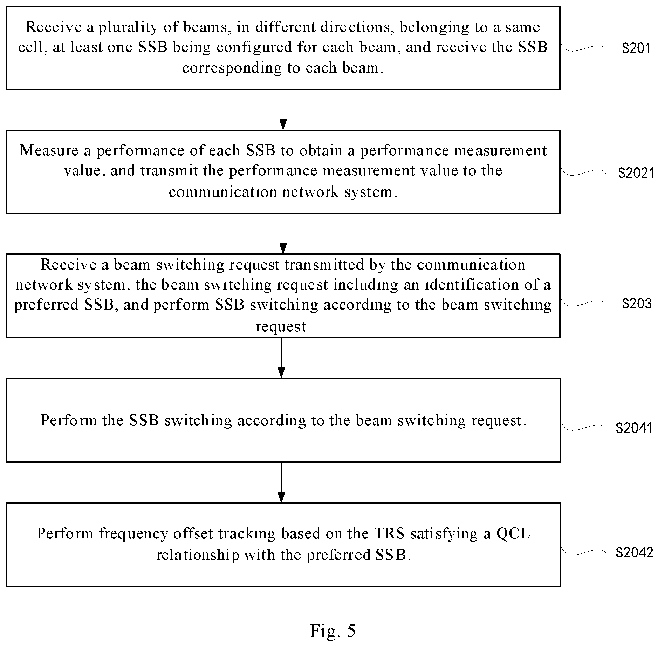

Referring to Fig. 5, in an implementation, the operation S202 of measuring the performance of each received SSB may include operation S2021.

In operation S2021, the RSRP of each received SSB is measured.

After receiving the SSBs, the terminal measures the RSRP of each received SSB, the RSRP may serve as a key parameter of strength of a signal to better reflect the performance of the SSB.

Referring to Fig. 5, in an implementation, after the operation S203 of performing the SSB switching according to the beam switching request in, the frequency offset estimation method may further include operations S2041 and S2042.

In operation S2041, the SSB switching is performed in response to the beam switching request.

In operation S2042, frequency offset tracking is performed based on the TRS satisfying a QCL relationship with the preferred SSB.

The terminal performs the frequency offset estimation according to the preferred SSB, and after performing the frequency offset estimation according to the preferred SSB, acquires a TRS corresponding to the preferred SSB according to the QCL corresponding to the preferred SSB during receiving service data transmitted by the communication network system, performs compensation and tracking of time offset and frequency offset according to the TRS, and feeds back a channel quality of a downlink channel to the communication network system according to a CSI-RS.

During receiving downlink data transmission, the terminal is to continuously track and compensate time offset and frequency offset, and the TRS can assist the terminal in compensating and tracking time offset and frequency offset.

In a third aspect, referring to Fig. 7, the present disclosure provides a communication network system, including: a plurality of transmitting units, a determining module and a transmitting module.

The plurality of transmitting units are configured to transmit a plurality of beams belonging to a same cell to a terminal, and each beam is configured with at least one SSB; at least two beams form an overlapping beam group, any two beams in the overlapping beam group are in different directions and overlapped, and all SSBs of any two beams in each overlapping beam group are different.

The determining module is configured to receive performance measurement values of the SSBs of the beams in the overlapping beam group transmitted by the terminal, and determine a preferred SSB from the SSBs based on the performance measurement values.

The transmitting module is configured to transmit a beam switching request to the terminal, the beam switching request including an identification of the preferred SSB.

According to the communication network system provided by the present disclosure, the beams, in different directions and overlapped, transmitted by the transmitting units are configured with different SSBs by the transmitting units. The communication network system determines a preferred SSB according to received performance measurement results of the SSBs and transmits the preferred SSB to the terminal, so that the terminal performs the frequency offset estimation according to the preferred SSB, that is, the terminal can determine the direction of the beam corresponding to the preferred SSB, and further accurately determine whether the frequency offset of the terminal is a positive frequency offset or a negative frequency offset, thereby obtaining an accurate frequency offset estimation result.

In a fourth aspect, referring to Fig. 8, the present disclosure provides a terminal, including: a receiving module, a measurement module, and a calculation module.

The receiving module is configured to receive a plurality of beams belonging to a same cell, the beams have different directions, each beam is configured with at least one SSB, the receiving module receives the SSB corresponding to each beam.

The measurement module is configured to measure a performance of each SSB received to obtain a performance measurement value and transmit the performance measurement value to a communication network system.

The calculation module is configured to receive a beam switching request transmitted by the communication network system, the beam switching request includes an identification of a preferred SSB, and the calculation module performs SSB switching according to the beam switching request.

According to the terminal provided by the present disclosure, after receiving a plurality of SSBs, the terminal measures performances of the plurality of SSBs and transmits performance measurement values to the communication network system, so that the communication network system determines a preferred SSB according to the measurement values, and the terminal performs frequency offset estimation and beam switching according to the preferred SSB. Since the transmitting units transmitting the beams in different directions and overlapped are configured with different SSBs, the terminal can determine the transmission unit corresponding to the preferred SSB according to the preferred SSB, that is, the terminal can determine the direction of the beam corresponding to the preferred SSB, and further accurately determine whether the frequency offset of the terminal is a positive frequency offset or a negative frequency offset, thereby obtaining an accurate frequency offset estimation result.

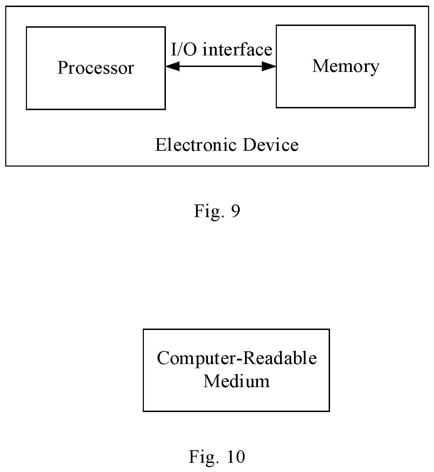

In a fifth aspect, with reference to Fig. 9, the present disclosure provides an electronic device, including: at least one processor; and a memory having at least one program stored thereon, the at least one program, executed by the at least one processor, causes the at least one processor to implement the signal transmission method provided by the first aspect of the present disclosure.

The processor is a device having data processing capability, which includes but is not limited to a central processing unit (CPU) and the like; the memory is a device having data storage capability, including, but not limited to, a random access memory (RAM, in particular, a synchronous dynamic random-access memory (SDRAM), a double data rate (DDR) synchronous dynamic random-access memory, a read-only memory (ROM), an electrically erasable programmable read-only memory (EEPROM), and a flash memory (FLASH).

In a sixth aspect, referring to Fig. 10, the present disclosure provides a computer-readable medium, storing a computer program thereon, the computer program, executed by a processor, causes the processor to implement the signal transmission method provided by the first aspect of the present disclosure.

The processor is a device having data processing capability, including but not limited to a CPU and the like; a memory is a device having data storage capability, including, but not limited to, RAM (in particular, SDRAM, DDR, etc.), ROM, EEPROM and FLASH; an I/O interface (read/write interface) is connected between the processor and the memory, and configured to implement information interaction between the memory and the processor, and includes but is not limited to a data bus or the like.

In a seventh aspect, with reference to Fig. 9, the present disclosure provides an electronic device, including: at least one processor; and a memory having at least one program stored thereon, the at least one program, executed by the at least one processor, causes the at least one processor to implement the frequency offset estimation method provided by the second aspect of the present disclosure.

The processor is a device having data processing capability, including but not limited to CPU and the like; the memory is a device having data storage capability, including, but not limited to, RAM (in particular, SDRAM, DDR, etc.), ROM, EEPROM and FLASH.

In an eighth aspect, referring to Fig. 10, the present disclosure provides a computer-readable medium, storing a computer program thereon, the computer program, executed by a processor, causes the processor to implement the frequency offset estimation method provided by the second aspect of the present disclosure.

The processor is a device having data processing capability, including but not limited to CPU and the like; a memory is a device having data storage capability, including, but not limited to, RAM (in particular, SDRAM, DDR, etc.), ROM, EEPROM and FLASH; an I/O interface is connected between the processor and the memory, and configured to enable information interaction between the memory and the processor, and includes but not limited to a data bus or the like.

The person skilled in the art will appreciate that all or some operations of the above described method, functional modules/units in the system and apparatus may be implemented as software, firmware, hardware, and suitable combinations thereof.

In a hardware implementation, the division between the functional modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a CPU, a digital signal processor or a microprocessor, or implemented as hardware, or implemented as an integrated circuit, such as an application specific integrated circuit. Such software may be distributed on a computer-readable storage medium which may include a computer storage medium (or non-transitory medium) or a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, RAM, ROM, EEPROM, flash memory or any other magnetic disk memory, CD-ROM, digital versatile disc (DVD) or any other optical disc storage device, magnetic cartridge, magnetic tape, magnetic disk storage or any other magnetic storage device, or may be any other medium used for storing the desired information and accessible by a computer. Moreover, it is well known to one ordinary skilled in the art that the communication medium typically includes a computer-readable instruction, a data structure, a program module, or other data in a modulated data signal, such as a carrier wave or any other transport mechanism, and may include any information delivery medium.

The present disclosure has disclosed example embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by one skilled in the art that various changes in form and details may be made without departing from the scope of the present disclosure as set forth in the appended claims.

## Claims

1. A signal transmitting method, applied to a communication network system, comprising:
transmitting a plurality of beams belonging to a same cell to a terminal, each beam of the plurality of beams belonging to the same cell being configured with at least one synchronization signal and physical broadcast channel block, SSB; and at least two beams of the plurality of beams belonging to the same cell forming an overlapping beam group, any two beams in the overlapping beam group being in different directions and overlapped, and all SSBs of any two beams being different;
receiving performance measurement values of SSBs of the beams in the overlapping beam group transmitted by the terminal, and determining one SSB from the SSBs according to the performance measurement values; and
transmitting a beam switching request to the terminal, the beam switching request comprising an identification of the one SSB.

2. The method of claim 1, further comprising:
after transmitting the beam switching request to the terminal, transmitting downlink information to the terminal through a transmitting unit corresponding to the one SSB.

3. The method of claim 1, wherein the receiving performance measurement values of SSBs of the beams in the overlapping beam group transmitted by the terminal and determining one SSB from the SSBs according to the performance measurement values, comprises:
receiving reference signal receiving powers of the SSBs of the beams in the overlapping beam group transmitted by the terminal; and
determining one SSB with a highest reference signal received power from the SSBs.

4. The method of any one of claims 1 to 3, further comprising:
before transmitting the beams belonging to the same cell to the terminal, configuring at least one SSB for each of transmitting units belonging to the same cell, wherein each transmitting unit transmits the beam to a preset direction, and the beam has at least one SSB configured by the transmitting unit corresponding to the beam.

5. The method of claim 4, further comprising:
after configuring the at least one SSB by the transmitting unit, configuring, for each SSB of the at least one SSB, a tracking reference signal, TRS, that satisfies a quasi-co-location, QCL, relationship with the SSB.

6. A frequency offset estimation method, applied to a terminal, comprising:
receiving a plurality of beams belonging to a same cell in different directions, and receiving a synchronization signal and physical broadcast channel block, SSB, corresponding to each beam of the plurality of beams belonging to the same cell, the beam being configured with at least one SSB;
measuring a performance of each received SSB to obtain a performance measurement value, and transmitting the performance measurement value to a communication network system; and
receiving a beam switching request transmitted by the communication network system, the beam switching request comprising an identification of one selected SSB, and performing SSB switching according to the beam switching request.

7. The method of claim 6, further comprising:
after performing SSB switching according to the beam switching request, performing frequency offset estimation according to the one selected SSB.

8. The method of claim 7, further comprising:
after performing frequency offset estimation according to the one selected SSB, performing frequency offset tracking according to a tracking reference signal, TRS, that satisfies a quasi-co-location, QCL, relationship with the one selected SSB.

9. The method of any one of claims 6 to 8, wherein the measuring a performance of each received SSB to obtain a performance measurement value, comprises:
measuring a reference signal receiving power of each received SSB.

10. A communication network system, comprising:
a plurality of transmitting units, configured to transmit a plurality of beams belonging to a same cell to a terminal, each beam of the plurality of beams belonging to the same cell being configured with at least one synchronization signal and physical broadcast channel block, SSB; and at least two beams of the plurality of beams belonging to the same cell forming an overlapping beam group, any two beams in the overlapping beam group being in different directions and overlapped, and all SSBs of any two beams being different;
a determining module, configured to receive performance measurement values of SSBs of the beams in the overlapping beam group transmitted by the terminal, and determine one SSB from the SSBs according to the performance measurement values; and
a transmitting module, configured to transmit a beam switching request to the terminal, the beam switching request comprising an identification of the one SSB.

11. A terminal, comprising:
a receiving module, configured to receive a plurality of beams belonging to a same cell and in different directions, and receive a synchronization signal and physical broadcast channel block, SSB, corresponding to each beam of the plurality of beams belonging to the same cell, the beam being configured with at least one SSB;
a measurement module, configured to measure a performance of each received SSB to obtain a performance measurement value and transmit the performance measurement value to a communication network system; and
a calculation module, configured to receive a beam switching request transmitted by the communication network system, the beam switching request comprising an identification of one selected SSB, and perform SSB switching according to the beam switching request.

12. An electronic device, comprising:
at least one processor; and
a memory having at least one program stored thereon, the at least one program, executed by the at least one processor, causes the at least one processor to implement the signal transmission method according to any one of claims 1 to 5.

13. A computer-readable medium, storing a computer program thereon, the computer program, executed by a processor, causes the processor to implement the signal transmission method according to any one of claims 1 to 5.

14. An electronic device, comprising:
at least one processor; and
a memory having at least one program stored thereon, the at least one program, executed by the at least one processor, causes the at least one processor to implement the frequency offset estimation method according to any one of claims 6 to 9.

15. A computer-readable medium, storing a computer program thereon, the computer program, executed by a processor, causes the processor to implement the frequency offset estimation method according to any one of claims 6 to 9.
